# FASCICULE DE BREVET EUROPEEN

(11) **EP 0 571 623 B1**
(45) Date de publication et mention de la délivrance du brevet: **30.08.1995**
(21) Numéro de dépôt: 93902348.7
(22) Date de dépôt: 17.12.1992
(51) Int. Cl.: B01D 53/34

(54) **DISPOSITIF DE TRAITEMENT DE FUMEES CONTENANT DES POLLUANTS GAZEUX**
Vorrichtung zur Behandlung von gasförmigen Schadstoffen aus Rauchgasen
DEVICE FOR THE TREATMENT OF WASTE GASES CONTAINING GASEOUS POLLUTANTS

(30) Priorité: 17.12.1991 FR 9115670
(43) Date de publication de la demande: 01.12.1993
(73) Titulaire: STEIN INDUSTRIE Société Anonyme dite:, F-78140 Vélizy Villacoublay (FR)
(72) Inventeur: BEAL, Corinne, F-78220 Viroflay (FR); LEMASLE, Jean-Michel, F-91430 Vauhallan (FR); MORIN, Jean-Xavier, F-45170 Neuville-aux-Bois (FR); VANDICKE, Michel, F-78950 Gambais (FR)
(74) Mandataire: Vigand, Privat
(86) Numéro de dépôt international: FR9201205
(87) Numéro de publication internationale: WO9311856

(56) Documents cités:
- EP-A- 0 088 551
- WO-A-88/04196
- WO-A-91/01792
- US-A- 4 038 369

## Description

La présente invention concerne un dispositif de traitement de fumées contenant des polluants gazeux et un matériau minéral basique pulvérulent injecté dans ces fumées pour en réduire la teneur en polluants.

Il peut être utilisé notamment pour le traitement de fumées contenant des polluants gazeux telles que l'anhydride sulfureux, l'anhydride sulfurique, l'acide chlorhydrique, l'acide fluorhydrique,............ et plus particulièrement pour la désulfuration de gaz de combustion de combustibles solides fossiles dans des centrales thermiques.

On sait que pour éliminer ces polluants on peut injecter dans la chambre de combustion des matériaux minéraux basiques, tels que la chaux vive, la chaux hydraté ou le carbonate de calcium, qui réagissent sur les polluants pour donner des sels de calcium. L'on doit cependant injecter dans les gaz de combustion un fort excès de matériau minéral basique par rapport à la quantité stoechiométrique correspondant à la totalité des polluants, afin d'obtenir un taux de neutralisation des polluants suffisant.

Le dispositif selon l'invention permet de n'utiliser qu'une moindre quantité de matériau minéral basique avec un meilleur rendement et une diminution de l'encrassement du dispositif. Ce dispositif est caractérisé par:
a) un cyclone pour séparer les fumées en une fraction enrichie en particules évacuée par une sortie basse du cyclone et une fraction appauvrie en particules évacuée par le haut du cyclone,
b) un cône divergent connecté à la sortie basse du cyclone et muni de moyens d'injection d'eau,
c) un réacteur vertical muni à sa partie haute d'un orifice central relié à la sortie du cône,
d) une canalisation reliant la sortie haute du cyclone avec un injecteur périphérique disposé en haut du réacteur autour de l'orifice central,
e) des moyens de refroidissement disposés sur ladite canalisation,
f) une conduite de sortie disposée en bas du réacteur évacuant les fumées vers un dépoussiéreur
Le meilleur rendement est obtenu grâce au contact amélioré entre les particules et l'eau réalisé dans le cône et dans la zone centrale du réacteur.

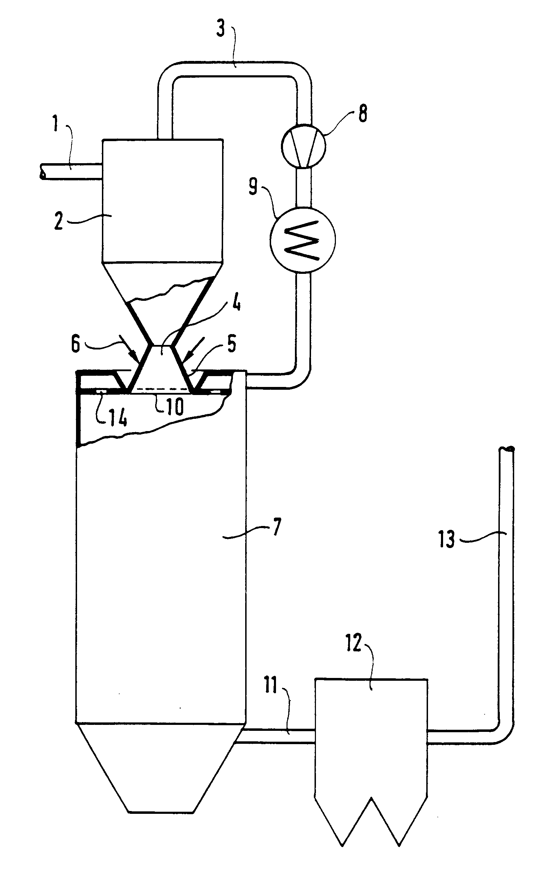

Il est décrit ci-après, à titre d'exemple et en référence à la figure du dessin annexé, un dispositif selon l'invention servant à la désulfuration de fumées d'une centrale thermique à combustible solide fossile.

L'installation est prévue pour assurer la désulfuration de débits élevés de gaz de combustion provenant d'une chambre de combustion. Il a été injecté un matériau minéral basique de neutralisation du dioxyde de soufre, soit dans la chambre de combustion (carbonate de calcium, chaux éteinte, chaux vive), soit à la sortie de celle-ci (chaux éteinte ou chaux vive).

Les fumées chaudes à 140°C environ parviennent par une tuyauterie 1 dans un cyclone de centrifugation 2. Elles s'y séparent en une fraction axiale appauvrie en particules, qui est évacuée par une sortie haute vers la canalisation 3, et une fraction périphérique enrichie en particules, qui s'écoule par une sortie basse 4 du cyclone. Cette sortie 4 se prolonge par un cône divergent 5, dont le pourtour est munie de buses de pulvérisation d'eau telles que 6. Le cône divergent débouche dans la zone centrale du haut d'un réacteur cylindrique 7, par un orifice central 10 prévu dans la paroi supérieure de ce réacteur.

La canalisation 3 d'évacuation des fumées appauvries en particules solides est relié à un ventilateur 8, qui les comprime pour compenser la perte de charge qu'introduit en aval un échangeur de chaleur 9. Les fumées appauvries refoulées par le ventilateur 8 se refroidissent dans l'échangeur 9 à environ 65°C, puis sont dirigées sur la zone périphérique du haut du réacteur 7 par un injecteur 14.

Dans le réacteur 7 les fumées appauvries en particules solides refroidies se mélangent avec les fumées enrichies en particules solides qui sont refroidies par l'eau et s'écoulent en plusieurs secondes (2 à 15 secondes) vers le bas du réacteur 1. Le flux de fumées enrichies en particules solides restant écarté des parois, le risque de dépôts sur celles-ci est réduit.

Du bas de la chambre réactionnelle, les fumées mélangées refroidies à environ 60°C (c'est-à-dire au-dessus de point de rosée) entraînant les particules solides, notamment la chaux réhydraté et les produits de désulfuration, se rendent par le conduit 11 dans un dépoussiéreur 12, formé par un filtre électrostatique ou un filtre à manches. Les fumées dépoussiérées sont évacuées par le conduit 13 vers la cheminée.

## Revendications

1. Dispositif de traitement de fumées contenant des polluants gazeux et un matériau minéral basique pulvérulent injecté dans ces fumées pour en réduire la teneur en polluants
caractérisé en ce qu'il comporte:
a) un cyclone (2) pour séparer les fumées en une fraction enrichie en particules évacuée par une sortie basse (4) du cyclone et une fraction appauvrie en particules évacuée par le haut du cyclone (2),
b) un cône divergent (5) connecté à la sortie basse (4) du cyclone (2) et muni de moyens d'injection d'eau (6),
c) un réacteur vertical (7) muni à sa partie haute d'un orifice central (10) relié à la sortie du cône (5),
d) une canalisation (3) reliant la sortie haute du cyclone avec un injecteur périphérique (14) disposé en haut du réacteur (7) autour de l'orifice central (10),
e) un ventilateur (8) et des moyens de refroidissement (9) disposés sur ladite canalisation (3),
f) une conduite de sortie (11) disposée en bas du réacteur (7) évacuant les fumées vers un dépoussiéreur (12)

## Claims

1. A device for treating flue gases containing gaseous pollutants and a basic inorganic material in powder form injected into said gases in order to reduce their content of pollutants, the device being characterized in that it comprises:
a) a cyclone (2) for separating the gases into a fraction with increased particle content that is removed via a bottom outlet (4) of the cyclone, and a fraction with reduced particle content that is removed via the top of the cyclone (2);
b) a divergent cone (5) connected to the bottom outlet (4) of the cyclone (2) and provided with water injection means (6);
c) a vertical reactor (7) provided at its top with a central orifice (10) connected to the outlet from the cone (5);
d) ducting (3) connecting the top outlet from the cyclone to a peripheral injector (14) disposed at the top of the reactor (7) around the central orifice (10);
e) a fan (8) and cooling means (9) disposed on said ducting (3); and
f) an outlet duct (11) disposed at the bottom of the reactor (7) to remove the gases to a dust separator (12).

## Patentansprüche

1. Vorrichtung zur Behandlung von Abgasen, die gasförmige Verunreinigungen sowie ein basisches, pulverförmiges, mineralisches Material enthalten, das in die Abgase zur Verringerung des Anteils an Verunreinigungen eingespritzt wird, dadurch gekennzeichnet, daß sie aufweist:
a) einen Zyklon (2), um die Abgase in einen partikelreichen Teilstrom, der durch einen unteren Auslaß (4) den Zyklon verläßt, und in einen partikelarmen Teilstrom zu trennen, der den Zyklon (2) oben verläßt,
b) einen sich nach unten erweiternden Trichter (5), der an den unteren Auslaß (4) des Zyklons (2) anschließt und Mittel zum Einspritzen von Wasser (6) enthält,
c) einen vertikalen Reaktor (7), der oben eine an den Auslaß des Trichters (5) angeschlossene zentrale Öffnung (10) aufweist,
d) eine den oberen Auslaß des Zyklons mit einem Einspritzring (14) rund um die zentrale Öffnung (10) am oberen Ende des Reaktors (7) verbindende Leitung (3),
e) einen Ventilator (8) und Kühlmittel (9) in der Leitung (3),
f) eine Ausgangsleitung (11) am unteren Ende des Reaktors (7), durch die die Abgase zu einem Staubfänger (12) abgeführt werden.
